# EUROPEAN PATENT SPECIFICATION

(11) **EP 1 885 636 B1**
(45) Date of publication and mention of the grant of the patent: **17.04.2013**
(21) Application number: 06733046.4
(22) Date of filing: 08.05.2006
(51) Int. Cl.: B65G 61/00, B65G 57/24, B65G 60/00, B65G 67/24

(54) **APPARATUS FOR UNLOADING A CARGO SPACE**
VORRICHTUNG ZUM ENTLADEN EINES FRACHTRAUMS
APPAREIL SERVANT A DECHARGER UN COMPARTIMENT A MARCHANDISES

(30) Priority: 09.05.2005 NL 1028990
(43) Date of publication of application: 13.02.2008
(73) Proprietor: Copal Development B.V., 7041 GE 's-Heerenberg (NL)
(72) Inventor: SCHENNING, Jozef, Gerhardus, Henricus, Maria, 7041 HA 's-Heerenberg (NL)
(74) Representative: Habets, Winand
(86) International application number: PCT/NL2006/000242
(87) International publication number: WO 2006/121329

(56) References cited:
- EP-A- 1 223 129
- DE-A1- 3 347 474
- DE-A1- 4 118 640
- DE-A1- 10 324 755
- DE-U1- 20 202 926
- DE-U1-202004 009 581
- GB-A- 2 042 460
- NL-C2- 1 017 970
- US-A- 5 015 145

## Description

The present invention relates to an apparatus for unloading stackable cargo units from a cargo space according to the preamble of claim 1.

DE 20 2004 009581 discloses an apparatus according to the preamble. Unloading stackable cargo units from a cargo space, such as a cargo space of a truck or a maritime container, is a labour-intensive job. In order to facilitate this heavy work an apparatus of the above type is known, e.g. from DE 20202926, which comprises a conveyor track in the form of a conveyor belt, wherein the conveyor belt can be extended and in this way can be brought further into the cargo space during unloading. Stackable cargo units placed on the conveyor belt are transported into a building, such as a building for storage or transfer, by the conveyor belt. The stackable cargo units are boxes, crates, or the like. Their hxwxl measurements are usually between 15 and 80 cm. The use of an arm makes it possible to carry the weight of the stackable cargo units, as a result of which the physical stress for personnel is reduced or even absent and they will be able to work faster. Especially when the cargo is cold (for example frozen) a great advantage can be achieved with the apparatus since otherwise personnel would be wearing gloves, which - although increasing comfort - reduce grip and complicate unloading. Furthermore, an arm makes it possible to pick up more than one stackable cargo unit at a time.

The known conveyor belt is often part of an automated warehouse. Many distribution centers, however, are not large enough to install such an expensive system. They need a cheap apparatus that can be deployed flexibly, which takes up little space yet facilitates unloading for the personnel and preferably accelerates it.

The present invention aims to provide an apparatus according to the preamble with which a cargo space, such as that of a truck or a maritime container, can be unloaded faster and with less stress for the personnel.

In order to easily pick up the stackable cargo units, the apparatus is designed such that the head comprises a first rodless cylinder, the rodless cylinder comprises a first table which is provided with a second rodless cylinder, and the second rodless cylinder comprises a second table which is provided with the array of vertically directed suction cups.

Using two coupled rodless cylinders makes it possible to pick up stackable cargo units from the bottom of the cargo space, such as a maritime container, as well as those that are situated near the upper side of the cargo space. In order to save costs, maritime containers are packed to the top and there is very little space between the upper cargo units and the upper side of the container. The height of an array of vertically directed suction cups is small and can be brought into this small space. Because of the coupling of the rodless cylinders as described, this high space can be reached. Advantageously, the head is attached to the arm such that it can rotate around a vertical axis as a result of which the cargo units, if desired, can be turned even before they are placed onto the conveyor track.

By using an array of suction cups that more small stackable cargo units can be picked up at a time, whereas large stackable cargo units - which often will be heavier - can still be picked up in a reliable way since they are held by more suction cups than small stackable cargo units. In the present application, a suction cup is meant to be a suction cup that is provided with underpressure during operation, also designated as vacuum. The underpressure can be achieved by enlarging the lumen of the suction cup that seals against a stackable cargo unit or, preferably, by removing air from the lumen of the suction cup. In this way, an apparatus is provided which makes it possible to take out stackable cargo units in a very limited space in such a way that the personnel who operate it experience little physical stress. This is how it works: Using the arm, the stackable cargo units are placed near the distal end of the conveyor track onto the conveyor track of the apparatus according to the invention and are transported from the distal end in the direction of the proximal end (i.e. in the first transport direction), where the distal end of the conveyor track is brought into the cargo space during unloading. It is conceivable that the apparatus is a stationary apparatus, and that the cargo space is moved relative to the apparatus. However, the apparatus is preferably mobile so that it can be used at more locations such as more docks or transfer stations. As the cargo space is unloaded further, the distal end of the conveyor track is brought deeper into in the cargo space such as, for example, a maritime container. The stackable cargo units are advantageously formed into a pallet layer. The pallet layer is then placed onto a pallet until the pallet is full. The full pallet is then transported by using, for example, a forklift truck as is generally used in distribution centers. These forklift trucks can follow the apparatus according to the invention in an excellent way while the apparatus enters the cargo space further during unloading. The width of the apparatus can be so small that the apparatus is smaller than the width of a standard cargo space such as a maritime container (i.e. less than 2m30). The use of the arm makes that the apparatus can be considerably shorter than the length of the longest cargo space (for example considerably shorter than a 40 foot maritime container). This increases the flexibility of the apparatus considerably. Because the stackable cargo units are transported by the apparatus, a considerable saving of (heavy) work and time is achieved. Preferably, the arm is a self-supporting arm, i.e. an arm which substantially remains at the same level without supply of energy (for example in the form of electricity, compressed air, hydraulics). The use of an arm makes it possible to keep the length of the conveyor track and thus the length of the total apparatus within limits, which also makes it easier to manoeuvre it or to relocate it to e.g. another transfer station dock. Instead of that or in addition to it, it is not necessary to bring the apparatus very far into in the cargo space.

A preferred embodiment is characterized in that the frame is provided with a first vertical axis, the arm is a hinging arm which comprises a first arm member and a second arm member wherein a first arm member is connected to the frame such that it can rotate around the first vertical axis, a second vertical axis connects the first arm member and the second arm member, and the head is connected to the second arm member via a third vertical axis.

Such a hinging arm is strong and efficient. A hinging arm can bridge a large distance. In the framework of the present invention the term "vertical" is understood to mean substantially at a right angle to the bottom of the cargo space, since deviations from the normal are permissible as long as these deviations do not hinder the work in the limited space of the cargo space such as a maritime container.

In order to further facilitate the personnel's work, the apparatus is preferably designed such that the second arm member is provided near the second vertical axis with a guide for a cable, the cable has a length that is smaller than the sum of the length of the first and the second arm member, and the first end of the cable is attached to the frame distally relative to the position of the first vertical axis, and the second end of the cable is attached to the head at the side of the head that lies between the third and the first vertical axis.

Thus, when the head is situated near the distal end of the conveyor track, the arm of the apparatus is forced towards the conveyor track and the head is turned towards the conveyor track. This reduces the physical stress for the personnel, since the arm more or less steers itself.

According to an important embodiment the frame is provided with a cylinder that can be actuated and which is connected to the first arm member.

Thus, the personnel need not move the arm, which may carry the stackable cargo units, yet just steer it. In order to smoothly pick up and release stackable cargo units, the cylinder is choked at the outer ends of its working range. The throttle range at each side is preferably at least 5 cm and more preferably ca. 10 cm.

A preferred embodiment is characterized in that the array of vertically directed suction cups is composed of units which include at least one vertically directed suction cup, wherein the units can move independently of each other in a direction with a vertical component.

In this way, it is guaranteed that stackable cargo units whose upper side is not horizontal, for example because they have collapsed or subsided, can still be picked up using the head. This saves the personnel manual work. Because of this, the working range (the height over which the array of suction cups can be moved) is also increased. This also makes it possible to pick up low (small) stackable package units from the bottom of the cargo space. Movement using a vertical component is preferably achieved using a hinging parallelogram construction.

According to a preferred embodiment each unit has a valve which closes itself in the event of unrestricted air supply from the at least one vertically directed suction cup of the unit.

In this way, it is guaranteed that the suction power exerted by other suction cups is not unnecessarily limited, which otherwise could result in that the head not picking up cargo (stackable cargo unit) or dropping the cargo.

A preferred embodiment is characterized in that the frame is provided with a guiding rail for the stackable cargo units and the conveyor track is a roller track of which at least part of the rolls are placed at an angle relative to the guiding rail in such a way that when transporting in the first transport direction, the stackable cargo units are brought into contact with the guiding rail.

Thus, the stackable cargo units can be lead away and gathered efficiently.

A preferred embodiment is characterized in that the suction cups are connected to a vacuum generator which is driven by compressed air.

Such a vacuum generator has a small volume and makes it possible to efficiently generate vacuum near the suction cups, as a result of which these can pick up the stackable cargo units in a faster and more secure way.

Although the compressed air can be supplied from elsewhere, just like electricity, it is preferred that the apparatus comprises a compressor for generating compressed air.

In this way, no connection for compressed air is needed which makes it possible to more easily transport the apparatus elsewhere, such as another loading dock, where it then can be operated again.

According to an advantageous embodiment, at least part of the frame is hollow and forms a pressure vessel for compressed air.

Thus, part of the apparatus is used in an elegant way for more than one purpose.

Advantageously, the apparatus according to the invention is designed such that the conveyor track has a width of at least 40 cm and not more than 100 cm, and the conveyor track has a length between 3 and 6 meters.

In this way, a compact apparatus is provided with which maritime containers of any length can be unloaded efficiently, while keeping the apparatus still relatively compact. The height of the apparatus according to the invention is preferably smaller than the highest inner height of a maritime container, i.e. smaller than 2m75.

In order to move the apparatus according to the invention, it is preferably provided with wheels, which wheels, placed proximally, advantageously have an adjustable height in order to keep the conveyor track substantially in a horizontal position and to prevent any part of the apparatus from coming into contact with the upper side of the maritime container.

In this way, the apparatus can be moved simply, and when positioned on a sloping floor the apparatus can be held in a substantially horizontal position.

Finally, the invention relates to a method for unloading a cargo space, which is characterized in that an apparatus according to the invention is used.

The present invention will now be elucidated with reference to the attached drawing, in which
fig. 1 shows a side view of the apparatus according to the invention;
fig. 2 shows a top view of the apparatus shown in fig. 1;
fig. 3a, 3b and 3c show an optional gathering station of the apparatus according to the invention in respectively a top view, front view and sectional view;
fig. 4a and b show a top view of an arm of the apparatus ac-L cording to the invention in two different positions;
fig. 5a and 5b show the head of the arm of fig. 4 in side view and top view respectively;
fig. 6a and 6b show in detail the head of fig. 5a and 5 b in side view; and
fig. 7a and 7b show in a front view and in a top view respectively an optional turning station, part of the apparatus of fig. 1.

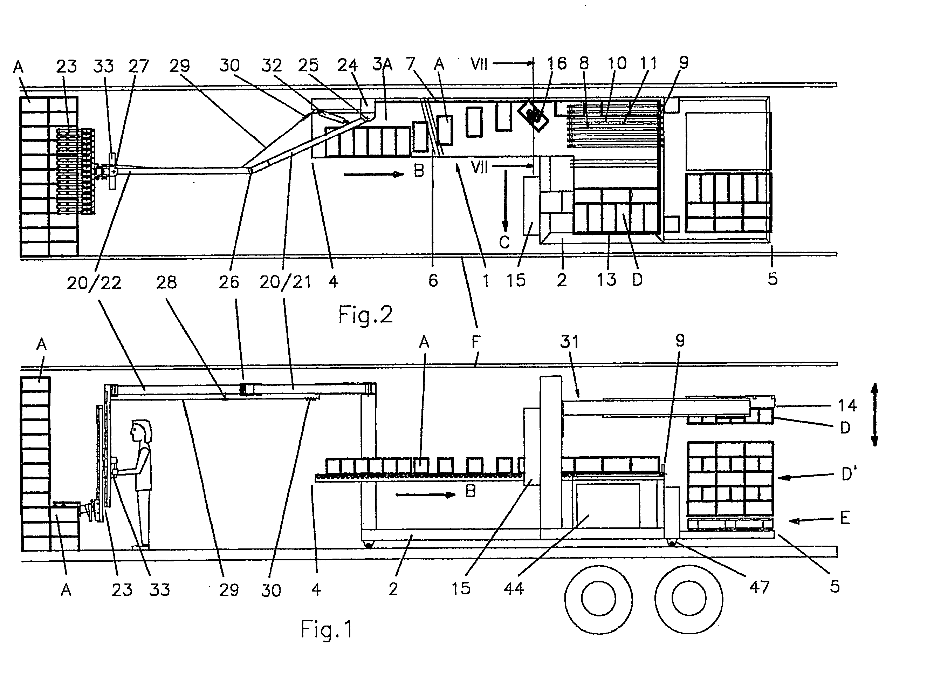

Figures 1 and 2 show in a side view, respectively in a top view, an apparatus 1 according to the invention for unloading a cargo space, in particular a cargo space which is closed at the upper side, such as a maritime container F. The apparatus 1 comprises a frame 2 which is provided with a conveyor track 3, here in the form of a roller track 3. The conveyor track 3 has a distal end 4 and a proximal end 5. When using the apparatus 1, stackable cargo units A, for example boxes, are placed near the distal end 4 onto the conveyor track 3. From this point, the stackable cargo units A are transported in the direction of the proximal end 5. This first transport direction is indicated by arrow B. According to a preferred embodiment, the conveyor track 3 comprises two courses, 3a and 3b, in which the transport of the distal course 3a takes places at a lower velocity than the transport in the proximal course 3b. Because of this, the distance between the stackable cargo units A is increased. The purpose hereof will be explained later. The conveyor track 3, here in the form of a roller track 3, comprises rolls 6, three of which are shown in fig. 2. At least some of these rolls 6 are at an angle (see fig. 2) to a guiding rail 7, as a result of which the stackable cargo units A will be pushed against the guiding rail 7 during transport in the first transport direction B. In this way, the stackable cargo units A are aligned against the guiding rail 7 which is helpful when gathering the cargo units A, as will be explained later. Preferably, the stackable cargo units A are placed onto the conveyor track 3 such that these, for example during transport in the first transport direction B, arrive in one row against the guiding rail 7.

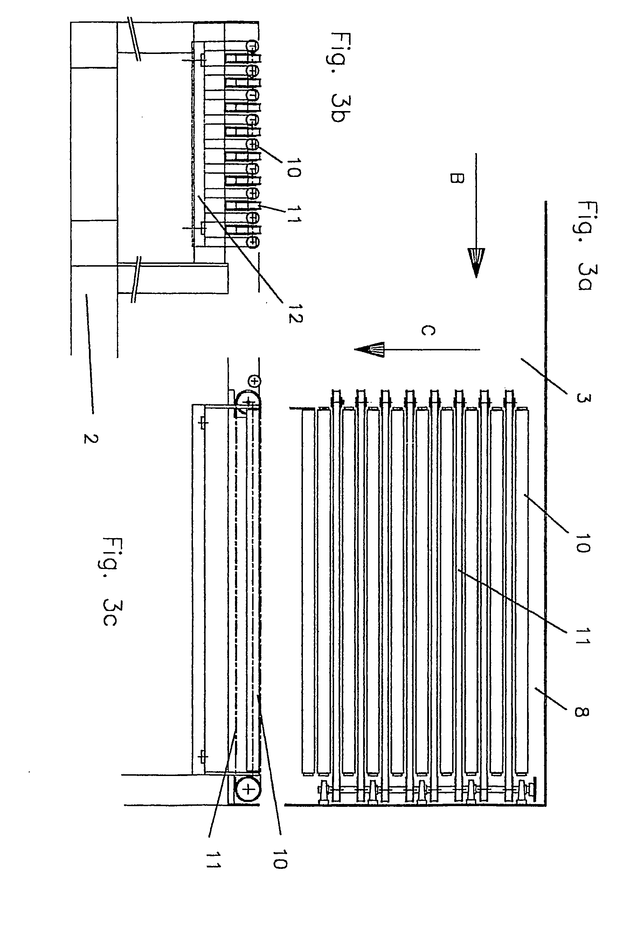

In the preferred embodiment described here, an optional gathering station 8 is situated contiguous with the conveyor track 3, or integrated therewith. This gathering station 8 comprises a first abutment 9. This abutment 9 gathers at least one, but more often more than one, stackable cargo units A, wherein the distance between the stackable cargo units A (again) is reduced to zero, while forming a column of gathered stackable cargo units A. The gathering station 8 is designed such that the gathered stackable cargo units A can be transported in transport direction C transversely to the first transport direction B. To this end, in the embodiment of the apparatus 1 described here, rolls 10 and transporting belts 11 are provided (fig. 3a) alternately. These can be adjusted in height relative to each other, wherein for transport in the first transport direction B, one of i) the rolls 10 and ii) the transporting belts 11 is situated higher than the other, whereas for transport in the second transport direction C on the other hand they are situated lower. To this end, one of i) the rolls 10 and ii) the transporting belts 11 is mounted onto, for example, a subframe 12 (fig. 3b), which subframe 12 can be adjusted in height relative to the frame 2. Such a construction for transporting in two directions is known in the art and needs no further elucidation.

Preferably, the frame 2 is also provided with a second abutment 13, which gathers at least one, but usually more than one, columns of gathered stackable cargo units A, producing a pallet layer D of gathered stackable cargo units A. This pallet layer D can be stacked onto a pallet E in various ways. In the apparatus 1 as shown, a movable array of suction cups 14 which can be adjusted in height is used as a stacking station 31, with which the pallet layer D can be picked up, moved and lowered onto a pallet E, or onto other pallet layers D' which already have been stacked there. As soon as the pallet E is full it can be moved in the usual way, in particular using a forklift truck.

Usually, stackable cargo units A have a rectangular, non-square cross-section. It is general knowledge that in order to form stably stacked pallets, the cargo units have to be stacked overlappingly. By using the apparatus according to the invention, this can be achieved very well while requiring minimal effort from personnel. To this end, the apparatus 1 is provided with a control unit 15, which chooses or calculates stacking patterns based on the size of the stackable cargo units A as entered, and the size of the pallet E that is used, wherein, if possible each time, alternating stacking patterns are chosen for the successive pallet layers, such that cargo units of adjacent pallet layers D are stacked overlapping each other. This is known in the art, for example from US 6.257.826.

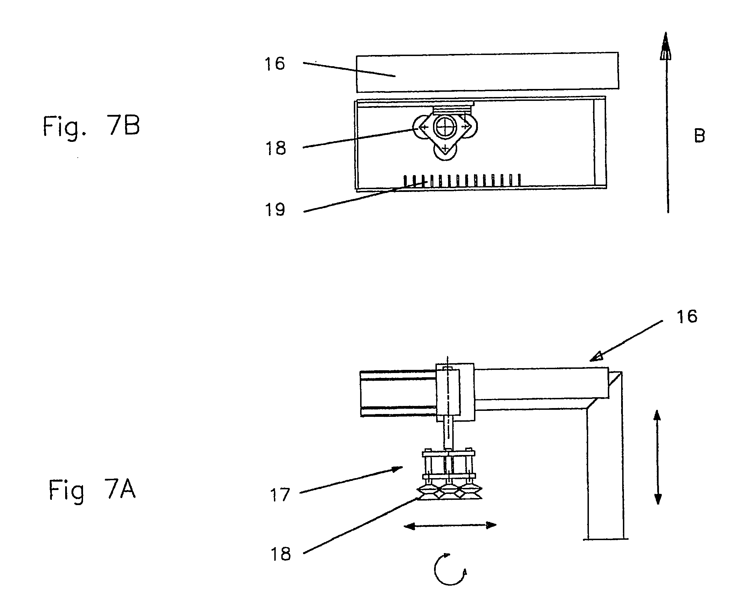

Although it is possible to manually turn stackable cargo units A on the conveyor track 3, it is highly preferred to do this automatically and under control of a control unit 15. For this purpose, a turning station 16 (fig. 7a, which shows a detail of the apparatus 1 according to line VII-VII in fig. 2) is situated upstream relative to the gathering station 8. This turning station 16 comprises, for example, a head 17 with suction cups 18, which can be adjusted in height. The head 17 pick ups a cargo unit A, turns it 90° and places the cargo unit back onto the conveyor track 3 against the guiding rail 7. Because the cargo units A have been placed at intervals by using the two courses 3a and 3b (fig. 2), it is not necessary to lift the cargo unit to be turned over the other cargo units on the conveyor track 3, which simplifies the construction and operation of the apparatus 1. The presence of the guiding rail 7 facilitates determining the location of the cargo unit to be turned, since the head 17 should hold the cargo unit A to be turned preferably near its center because then less force is required and the risk of untimely releasing the stackable cargo unit by the head 17 is reduced.

Preferably, the frame 2 is provided with an array of photo cells 19 (fig. 7b shows, in spite of the fact that it is a top view, the location of the photo cells 19 present at the side facing the conveyor track 3) above the conveyor track 3 at the turning station 16, with which the width and/or orientation and/or presence of a cargo unit to be turned can be determined. In order to be able to pick up a stackable cargo unit, the head 17 can move upwards and downwards, and the distance relative to the guiding rail 7 can be varied as well, in order to be able to adjust the position where the head pick ups a stackable cargo unit A to that cargo unit A.

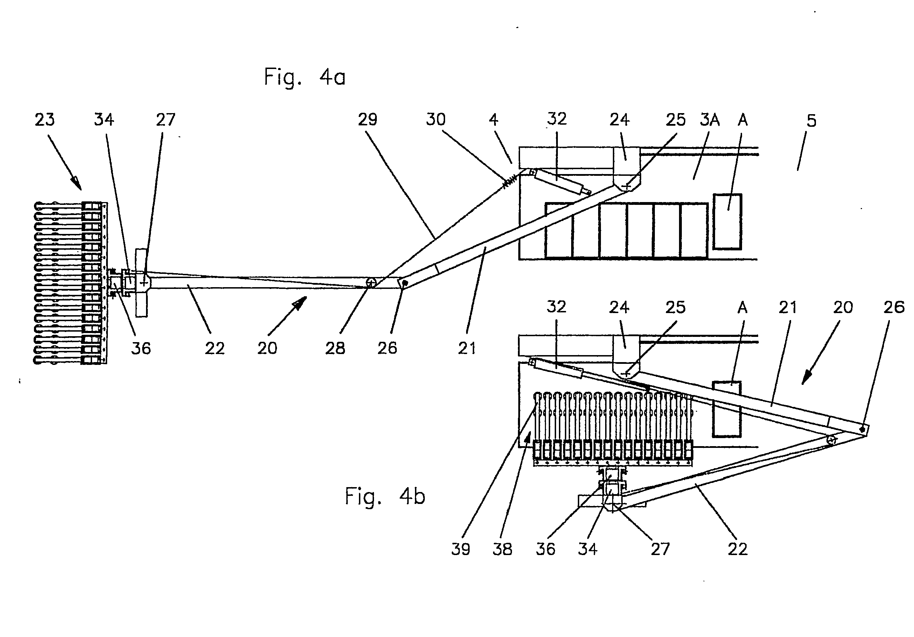

Figure 4 shows an arm 20 suitable for the apparatus according to the invention, which arm 20 comprises a first arm member 21, a second arm member 22 and a head 23 for picking up stackable cargo units A. The arm 20 is attached to the frame 2 by means of a post 24. The whole is designed such that the total height of the apparatus 1 is less than the internal height of a maritime container, i.e. lower than 275 cm, preferably lower than 245 cm. The first arm member 21 is connected at a proximal end (seen from the post 24) to the post 24 such that it can rotate around a first vertical axis 25. The second arm member 22 is connected with a proximal end to the distal end of the first arm member 21 such that it can rotate around a second vertical axis 26. The head 23 is connected to the distal end of the second arm member 22 such that it can rotate around a third vertical axis 27. Here, vertical means that the deviation of the vertical axes relative to the normal is not more than 10°, preferably less than 7°, and most preferably less than 4°.

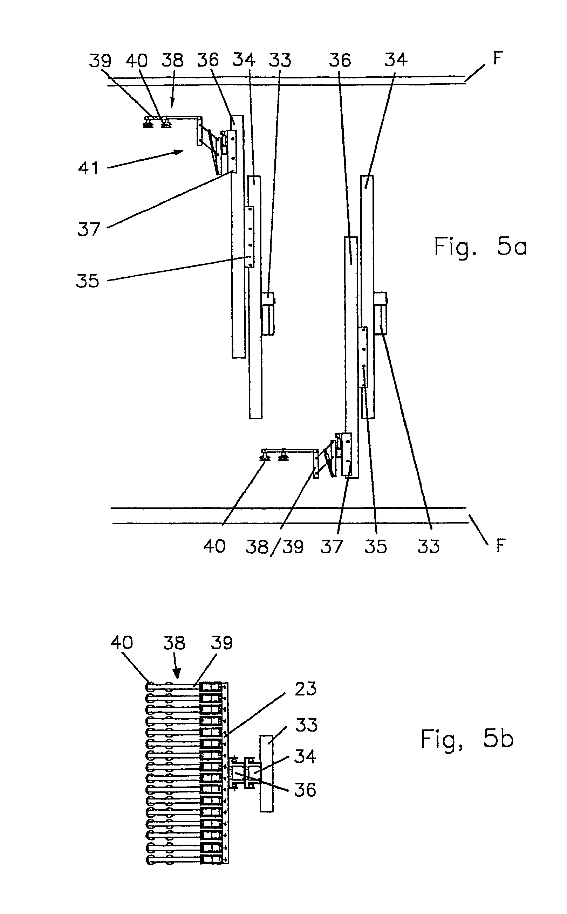

In order to facilitate the work for the personnel who operate the arm, the arm 20 according to a preferred embodiment is designed to be self-steering. To this end, according to the embodiment shown here (fig. 4a and 4b), the second arm member 22 is provided with a guide 28 for a cable 29 near its proximal end, that is, near the second vertical axis 26. In the embodiment described, it is situated below the second arm member 22 but nevertheless it is shown in fig. 4a and 4b. In order to limit friction, the guide 28 preferably is a rotatable wheel 28. Upstream (relative to the first transport direction) of first vertical axis 25, the cable 29 is attached with its first end to the post 24, and with its second end to the head 23 at the side of the head 23 which lays between the third and the first vertical axis (26, 25 respectively). The length of cable 29 is smaller than the sum of the length of the first and the second arm member (21, 22 respectively) and is kept under tension by means of a spring 30. The effect of this construction is that the arm 20 of the apparatus 1, when the head 23 is situated near the distal end of the conveyor track 3, is forced towards the conveyor track 3, and the head 23 is turned towards the conveyor track. This is shown in fig. 4a and 4b. The force that has to be exerted onto the arm 20 by the personnel can be reduced by providing the apparatus 1 with a pneumatically or hydraulically driven cylinder 32. This is attached upstream (relative to the first transport direction) to the post 24 and to the first arm member 21. This cylinder has at each end of its work course a choking course of 100 mm for suppressing the outermost movements of the arm 20. The cylinder 32 is operated by means of a control unit 33 which is attached to the head 23 of the arm 20 (fig. 5a).

Figure 5a shows in a side view the head 23 of the apparatus 1. The head 23 which, via the third vertical axis 27 is rotatably attached to the distal end of the second arm member 22 (not shown), comprises a first rodless cylinder 34. The rodless cylinder 34 comprises a first table 35 which is provided with a second rodless cylinder 36, and the second rodless cylinder 36 comprises a second table 37. This second table 37 is provided with an array 38 of elements 39 that are substantially in a horizontal position, wherein in the embodiment shown each element 39 is provided with two vertically directed suction cups 40 for picking up at least one stackable cargo unit A at its upper side. The elements 39 can be moved independently of the other elements 39 in a vertical direction (fig. 5a and 5b) by means of a hinging parallelogram construction 41 and a pneumatic cylinder 42, as a result of which they substantially remain in a horizontal position and also can come into contact with the upper side of a cargo unit A when this is not in a horizontal position or when it is collapsed. A very important aspect is, that with such a construction the highest stackable cargo units A can be picked up, and yet still small stackable cargo units A can be picked up from the floor of the cargo space.

The control unit 33 suitably has 2 buttons for moving the array of elements 39 upwards and downwards, and two buttons for operating the cylinder 32 for retracting and extending the arm 20, and two buttons for switching on and off the vacuum for the elements 39.

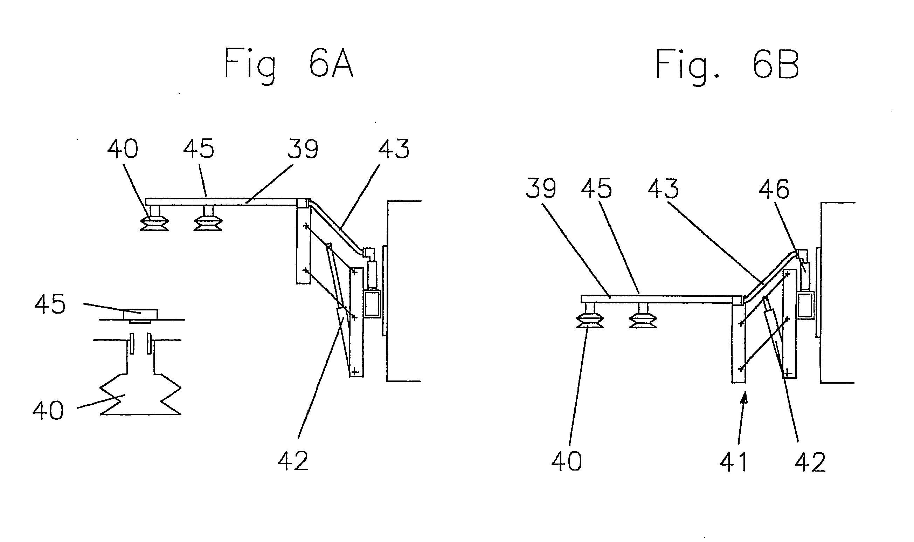

The elements 39 are connected via vacuum hoses 43 (fig. 6, not in the other figures) to a vacuum generator (not shown). This vacuum generator is advantageously of the type that works with compressed air, such as model PVP50MD, which can be obtained from Hemmes, Hengelo, the Netherlands. Vacuum generators of this type are small and can be attached near the head or in or at the head. Because they are close to the suction cups 40, these can then work fast (short latency). In turn, the vacuum generator is connected to compressor 44 (fig. 1). Preferably, a pressure vessel is used and the compressed air is obtained by the vacuum generator from the pressure vessel, which is filled by the compressor 44. The compressor 44 is, for example, electrically driven. In the embodiment shown, the frame 2 is hollow and is used as a pressure vessel. In practice a pressure of 10 bar is used.

Fig. 6a and 6b show a cross section through the head 23, where an element 39 having two suction cups 40 can be seen. The element 39 is hollow, and each lumen of the suction cups 40 is connected to the lumen of the element 39 by means of a hollow screw 45 (see inset at fig. 6a). The lumen of the element 39 is connected via a vacuum hose 43 with a self-closing valve 46. A self-closing valve 46 is a valve that closes itself when the air flow rate is too high (for example model 63.005 which can be obtained from Hemmes, Hengelo, Nederland). In this way, it is achieved that the vacuum of other elements 39 generated by the vacuum generator, is not at risk when element 39 cannot get hold of a package unit A.

The apparatus 1 can be moved by means of wheels 47 (fig. 1). At least one pair, for example the proximally situated pair, can advantageously move, preferably hydraulically, in a vertical direction.

Within the scope of the attached claims, the apparatus according to the invention can be designed in various ways. For example, it can be shaped as a T, wherein at the proximal end at both ends of the conveyor track two second abutments are present. These allow to alternately compose a pallet layer at the one or the other second abutment, and to fill a pallet. In this way, it is also easily possible to separately form two different cargo units to pallet layers. The arm may for example be a telescopic arm, or be composed of movable arm members that move perpendicularly relative to each other. In the latter case, the frame is preferably provided with a first arm member at the distal end that can move lengthwise, the first arm member is connected to a second arm member that can move in a substantially horizontal direction transversely to the direction of movement of the first arm member, and the second arm member is provided with a third arm member for carrying out the substantially vertical movement, and all arm members are driven arm members. In this way, a simple construction is provided wherein the transport of the stackable cargo units (such as boxes) picked up by the head, can be completely carried out by the arm, without physical stress for the personnel who operate it. Preferably, the third arm comprises two rodless cylinders, as describe above.

## Claims

1. Apparatus (1) for unloading stackable cargo units from a cargo space, wherein the apparatus (1) comprises a frame (2) which is provided with an active conveyor track (3) having a distal end (4) and a proximal end (5), wherein the dimensions of at least a part of the frame (2) with the conveyor track (3) are such that it can be brought into the cargo space, the frame (2) near the distal end (4) is provided with a movable arm (20), wherein the movable arm (20) is provided with a head (17) for picking up at least one stackable cargo unit, wherein the head (17) comprises an array with vertically directed suction cups (40), which array can be moved in the vertical direction for picking up at least one stackable cargo unit at its upper side, **characterized in that** the head (17) comprises a first rodless cylinder (34), the rodless cylinder (34) comprises a first table (35) which is provided with a second rodless cylinder (36), and the second rodless cylinder (36) comprises a second table (37) which is provided with the array of vertically directed suction cups (40).

2. Apparatus according to claim 1, **characterized in that** the frame (2) is provided with a first vertical axis, the arm (20) is a hinging arm (20) which comprises a first arm member (21) and a second arm member (22) wherein a first arm member (21) is connected to the frame (2) such that it can rotate around the first vertical axis, a second vertical axis connects the first arm member (21) and the second arm member (22), and the head (17) is connected to the second arm member (22) via a third vertical axis.

3. Apparatus according to claim 2, **characterized in that** the second arm member (22) is provided near the second vertical axis with a guide for a cable, the cable has a length that is smaller than the sum of the length of the first and the second arm member (22), and the first end of the cable is attached to the frame (2) distally relative to the position of the first vertical axis, and the second end of the cable is attached to the head (17) at the side of the head (17) that lies between the third and the first vertical axis.

4. Apparatus according to one of the claims 2 or 3, **characterized in that** the frame (2) is provided with a cylinder that can be actuated and which is connected to the first arm member (21).

5. Apparatus according to one of the previous claims, **characterized in that** the array of vertically directed suction cups (40) is composed of units which include at least one vertically directed suction cup, wherein the units can move independently of each other in a direction with a vertical component.

6. Apparatus according to claim 5, **characterized in that** each unit has a valve which closes itself the event of unrestricted air supply from the at least one vertically directed suction cup of the unit.

7. Apparatus according to one of the previous claims, wherein the frame (2) is provided with a guiding rail for the stackable cargo units and the conveyor track (3) is a roller track of which at least part of the rolls are placed at an angle relative to the guiding rail in such a way that when transporting in the first transport direction the stackable cargo units are brought into contact with the guiding rail.

8. Apparatus according to one of the previous claims, **characterized in that** the suction cups (40) are connected to a vacuum generator which is driven by compressed air.

9. Apparatus according to claim 8, **characterized in that** the apparatus (1) has a compressor for generating compressed air.

10. Apparatus according to claim 9, **characterized in that** at least part of the frame (2) is hollow and forms a pressure vessel for compressed air.

11. Apparatus according to one of the previous claims, **characterized in that** the conveyor track (3) has a width of at least 40 cm and not more than 100 cm, and that the conveyor track (3) has a length between 3 and 6 meters.

12. Method for unloading a cargo space, **characterized in that** an apparatus (1) according to one of the previous claims is used.

## Patentansprüche

1. Vorrichtung (1) zum Entladen stapelbarer Frachteinheiten von einem Frachtraum, wobei die Vorrichtung (1) einen Rahmen umfasst, der mit einem aktiven Förderband (3) ausgestattet ist, welches ein entferntes Ende (4) und ein nahes Ende (5) aufweist, wobei die Abmaße von wenigstens einem Teil des Rahmens (2) mit dem Förderband (3) so sind, dass es in den Frachtraum hereingebracht werden kann, der Rahmen (2) nahe des entfernten Endes (4) mit einem beweglichen Arm (20) ausgestattet ist, wobei der bewegliche Arm (20) mit einem Kopf (17) ausgestattet ist, welcher wenigstens eine bewegliche Frachteinheit aufnehmen kann, wobei der Kopf (17) einen Bereich mit vertikal ausgerichteten Saugnäpfen (40) aufweist, der in Vertikalrichtung bewegt werden kann, um wenigstens eine stapelbare Frachteinheit auf ihrer Oberseite aufzunehmen, **dadurch gekennzeichnet, dass** der Kopf (17) einen ersten Hohlzylinder (34) umfasst, dass der Hohlzylinder (34) einen ersten Tisch (35) umfasst, der mit einem zweiten Hohlzylinder (36) ausgestattet ist, wobei der zweite Hohlzylinder (36) einen zweiten Tisch (37) umfasst, der mit dem Bereich mit vertikal ausgerichteten Saugnäpfen (40) ausgestattet ist.

2. Vorrichtung nach Anspruch 1, **dadurch gekennzeichnet, dass** der Rahmen (2) eine erste vertikale Achse aufweist, der Arm (20) ein Gelenkarm ist, der ein erstes Armglied (21) und ein zweites Armglied (22) aufweist, wobei das erste Armglied (21) derart mit dem Rahmen (2) verbunden ist, dass es um die erste vertikale Achse rotieren kann, dass eine zweite vertikale Achse das erste Armglied (21) und das zweite Armglied (22) verbindet, und dass der Kopf (17) mit dem zweiten Armglied (22) durch eine dritte vertikale Achse verbunden ist.

3. Vorrichtung nach Anspruch 2, **dadurch gekennzeichnet, dass** das zweite Armglied (22) nahe der zweiten vertikalen Achse mit einer Führung für ein Kabel vorgesehen ist, wobei das Kabel eine Länge hat, die kleiner ist als die Summe der Längen des ersten und des zweiten Armgliedes (22), dass das erste Ende des Kabel an dem Rahmen (2) in einer Entfernung relativ zu der Position der ersten vertikalen Achse festgelegt ist und dass das zweite Ende des Kabels am Kopf (17) festgelegt ist, auf der Seite des Kopfes (17) der sich zwischen der dritten und der ersten vertikalen Achse befindet.

4. Vorrichtung nach einem der Ansprüche 2 oder 3, **dadurch gekennzeichnet, dass** der Rahmen (2) mit einem Zylinder ausgestattet ist, der betätigt werden kann und der mit dem ersten Armglied (21) verbunden ist.

5. Vorrichtung nach einem der vorhergehenden Ansprüche, **dadurch gekennzeichnet, dass** der Bereich mit vertikal ausgerichteten Saugnäpfen (40) aus Einheiten aufgebaut ist, die wenigstens einen vertikal ausgerichteten Saugnapf umfassen, wobei die Einheiten unabhängig voneinander sich in eine Richtung mit vertikaler Komponente bewegen können.

6. Vorrichtung nach Anspruch 5, **dadurch gekennzeichnet, dass** jede Einheit ein Ventil besitzt, welches selbsttätig schließt im Falle einer unbeschränkten Luftzufuhr von wenigstens einem vertikal ausgerichteten Saugnapf in der Einheit.

7. Vorrichtung nach einem der vorhergehenden Ansprüche, **dadurch gekennzeichnet, dass** der Rahmen (2) mit einer Führungsschiene für die stapelbaren Frachteinheiten und das Förderband (3) ein Rollenband ist, wobei wenigstens ein Teil der Rollen in einem Winkel relativ zur Führungsschiene derart angeordnet sind, dass die stapelbaren Frachteinheiten, wenn sie in die erste Transportrichtung bewegt werden, in Kontakt mit der Führungsschiene gebracht werden.

8. Vorrichtung nach einem der vorhergehenden Ansprüche, **dadurch gekennzeichnet, dass** die Saugnäpfe (40) mit einem Vakuumgenerator verbunden sind, der mit Druckluft betrieben wird.

9. Vorrichtung nach Anspruch 8, **dadurch gekennzeichnet, dass** die Vorrichtung (1) einen Kompressor zur Herstellung von Druckluft umfasst.

10. Vorrichtung nach Anspruch 9, **dadurch gekennzeichnet, dass** wenigstens ein Teil des Rahmens (2) hohl ist und einen Druckbehälter für Druckluft bildet.

11. Vorrichtung nach einem der vorhergehenden Ansprüche, **dadurch gekennzeichnet, dass** das Förderband (3) eine Breite von wenigstens 40 cm und höchstens 100 cm besitzt und dass das Förderband (3) eine Länge zwischen 3 und 6 Metern aufweist.

12. Verfahren zur Entladung eines Frachtraums, **dadurch gekennzeichnet, dass** eine Vorrichtung (1) nach einem der vorhergehenden Ansprüche verwendet wird.

## Revendications

1. Appareil (1) pour le déchargement d'unités à marchandises empilables depuis un compartiment à marchandises, l'appareil (1) comprenant un châssis (2) qui est pourvu d'une voie de transport active (3) ayant une extrémité distale (4) et une extrémité proximale (5), les dimensions d'au moins une partie du châssis (2) avec la voie de transport (3) étant telles qu'il peut être amené dans le compartiment à marchandises, le châssis (2) à proximité de l'extrémité distale (4) étant pourvu d' un bras mobile (20), le bras mobile (20) étant pourvu d'une tête (17) pour saisir au moins une unité à marchandises empilable, la tête (17) comprenant une série de ventouses (40) orientées verticalement, laquelle série est apte à être déplacée dans la direction verticale pour saisir au moins une unité à marchandises empilable par sa face supérieure, **caractérisé en ce que** la tête (17) comprend un premier vérin sans tige (34), le vérin sans tige (34) comprenant une première table (35) qui est pourvue d'un deuxième vérin sans tige (36), et le deuxième vérin sans tige (36) comprenant une seconde table (37) qui comprend la série de ventouses orientées verticalement (40).

2. Appareil selon la revendication 1, **caractérisé en ce que** le châssis (2) comprend un premier axe vertical, le bras (20) est un bras articulé (20) qui comprend un premier élément de bras (21) et un deuxième élément de bras (22), un premier élément de bras (21) étant relié au châssis (2) de manière à pouvoir tourner autour du premier axe vertical, un second axe vertical reliant le premier élément de bras (21) et le deuxième élément de bras (22), et la tête (17) est reliée au deuxième élément de bras (22) selon un troisième axe vertical.

3. Appareil selon la revendication 2, **caractérisé en ce que** le deuxième élément de bras (22) comprend, à proximité du deuxième axe vertical, un guide pour un câble, le câble ayant une longueur qui est plus petite que la somme de la longueur du premier et du deuxième élément de bras (22), et la première extrémité du câble est fixée au châssis (2) de manière distale par rapport à la position du premier axe vertical, et la deuxième extrémité du câble est fixée à la tête (17) au niveau du côté de la tête (17) qui se trouve entre le troisième et le premier axe vertical.

4. Appareil selon l'une quelconque des revendications 2 ou 3, **caractérisé en ce que** le châssis (2) est muni d'un vérin qui peut être actionné et qui est relié au premier élément de bras (21).

5. Appareil selon l'une quelconque des revendications précédentes, **caractérisé en ce que** la série de ventouses orientées verticalement (40) est composée d'unités qui comprennent au moins une ventouse dirigée verticalement, les unités pouvant se déplacer indépendamment l'une de l'autre selon une direction ayant une composante verticale.

6. Appareil selon la revendication 5, **caractérisé en ce que** chaque unité a une soupape qui ferme elle-même l'évent d'alimentation en air libre à partir d'au moins une ventouse orientée verticalement de l'unité.

7. Appareil selon l'une quelconque des revendications précédentes, dans lequel le cadre (2) est pourvu d'un rail de guidage pour les unités à marchandises empilables et la voie de transport (3) est un chemin de roulement dont au moins une partie des rouleaux sont disposés de façon angulée par rapport au rail de guidage de telle sorte que, lors du transport dans la première direction de transport, les unités à marchandises empilables sont amenées en contact avec le rail de guidage.

8. Appareil selon l'une quelconque des revendications précédentes, **caractérisé en ce que** les ventouses (40) sont reliées à un générateur de vide qui est piloté par de l'air comprimé.

9. Appareil selon la revendication 8, **caractérisé en ce que** l'appareil (1) comprend un compresseur pour la génération d'air comprimé.

10. Appareil selon la revendication 9, **caractérisé en ce qu'**au moins une partie du châssis (2) est creuse et forme une enceinte sous pression pour l'air comprimé.

11. Appareil selon l'une quelconque des revendications précédentes, **caractérisé en ce que** la voie de transport (3) présente une largeur d'au moins 40 cm et pas plus de 100 cm, et **en ce que** la voie de transport (3) a une longueur comprise entre 3 et 6 mètres.

12. Procédé de déchargement d'un compartiment à marchandises, **caractérisé en ce qu'**un appareil (1) selon l'une quelconque des revendications précédentes est utilisé.
